# EUROPEAN PATENT APPLICATION

(11) **EP 3 236 400 A1**
(43) Date of publication of application: **25.10.2017**
(21) Application number: 17166895.7
(22) Date of filing: 18.04.2017
(51) Int. Cl.: G06Q 10/08

(54) **ASSET MANAGEMENT SYSTEM**

(30) Priority: 20.04.2016 GB 201606884
(71) Applicant: Cook, Bernard, Cheltenham, Gloucestershire GL53 7DW (GB)
(72) Inventor: Cook, Bernard, Cheltenham, Gloucestershire GL53 7DW (GB)
(74) Representative: Hocking, Adrian Niall

(57) **Abstract**

An asset management system (12) comprises an asset location indicator (64) for indicating a unique identifier specific to a physical asset (38) to be managed within an interior (16) of a building (10), three or more room-locatable signal receivers (66) locatable in spaced-apart relationship around said asset location indicator (64) to define an interior area of said building (10), and a server (44) in data communication with the room-locatable signal receivers (66). An electronic relationship matrix (56) corresponds to said interior area with the server (44) having processing means which automatically updates the relationship matrix (56) when there is an interior locational change in the asset location indicator (64). A building (10) and a method of managing a physical asset within an interior (16) of a building (10) both using such a system (12) are also provided.

## Description

The present invention relates to an asset management system, to a building utilising such an asset management system to manage at least one energisable device therewithin, and to a method of managing a physical asset within an interior of a building using such a system.

Traditional asset management of physical items requires personnel to manually take and record stock or items and their location. A spreadsheet or other data recordal device is then typically used by the person charged with the stock take and manually updated.

However, particularly when energisable devices, such as installed light bulbs, are to be recorded, in large organisations, this becomes hugely onerous, time consuming and prone to errors.

Additionally, when an energisable device is moved to a different location, specific requirements to enable operation, whether that is standard operation or user-specific operation, may also have to be reinstalled or reapplied. Again, this is prone to errors and can be enormously time-consuming when applied to large organisations or corporations.

By way of example, if an employee in a medium to large organisation is moved to a different location within an office building, the lighting requirements, heating and/or cooling requirements, power to the associated computer terminal based on working hours, security monitoring, and even height and/or orientation specific requirements of associated furniture, along with other factors all have to be changed, updated and/or reconfigured based on the new location. To date, this management is all undertaken manually by a variety of support staff, such as technicians, and maintenance and security personnel.

Even just tracking and recording a repositioning of furniture, such as moving a table and/or chair from one room, such as a classroom, in a school to another room, is a manual process, which is therefore frequently not undertaken.

The present invention therefore seeks to provide a solution to one or more of these problems.

According to a first aspect of the invention an asset management system comprising an asset location indicator for indicating a unique identifier specific to a physical asset to be managed within an interior of a building, three or more room-locatable signal receivers locatable in spaced-apart relationship around said asset location indicator to define an interior area of said building, a server in data communication with the room-locatable signal receivers, and an electronic relationship matrix corresponding to said interior area, the server having processing means which automatically updates the relationship matrix when there is a change in the asset location indicator.

Preferable and/or optional features of the first aspect of the invention are set forth in claims 2 to 16, inclusive.

According to a second aspect of the invention, there is provided an asset management system comprising an asset location indicator for outputting a unique identifying signal specific to an energisable physical asset to be managed within an interior of a building, three or more room-locatable signal receivers locatable in spaced-apart relationship around said asset location indicator to define an interior area of said building, a server in data communication with the room-locatable signal receivers, and an electronic relationship matrix corresponding to said interior area, the server having processing means which automatically updates the relationship matrix when movement of the asset location indicator is determined and which automatically determines and installs associated firmware based on the relationship matrix.

According to a third aspect of the invention, there is provided a building comprising an asset management system, and at least one energisable device within an interior of the building and managed by the asset management system, the asset management system including an asset location indicator which indicates a unique identifier specific to the energisable device, three or more room-located signal receivers located in spaced-apart relationship around said asset location indicator to define an interior area of said building, a server in data communication with the room-located signal receivers, and an electronic relationship matrix corresponding to said interior area, the server having processing means which automatically updates the relationship matrix when there is a change in the asset location indicator.

According to a fourth aspect of the invention a method of managing a physical asset within an interior of a building, preferably using an asset management system according to the first aspect of the invention, the method comprising the steps of: a] locating three or more room-located signal receivers in spaced-apart relationship to define an interior area of the building; b] associating an asset location indicator with a physical asset located within the interior area; c] the signal receivers determining a position of the physical asset within the interior area based on the asset location indicator; and d] automatically updating an electronic relationship matrix corresponding to the interior area and a position of the physical asset, when there is a change in the asset location indicator.

According to a fifth aspect of the invention, there is provided a method of managing a physical asset within an interior of a building, preferably using an asset management system in accordance with the first aspect of the invention, the method comprising the steps of: a] locating three or more room-located signal receivers in spaced-apart relationship to define an interior area of the building; b] associating an asset location indicator with a physical asset located within the interior area; c] the signal receivers determining a position of the physical asset within the interior area based on the asset location indicator; d] automatically updating an electronic relationship matrix corresponding to the interior area and a position of the physical asset, when there is determined a change in position of the physical asset via the asset location indicator; and e] using a server to automatically determine, and preferably install, based on the relationship matrix required firmware associated with the physical asset due to the determined change in position.

The invention will now be more particularly described, by way of example only, with reference to the accompanying drawings, in which:

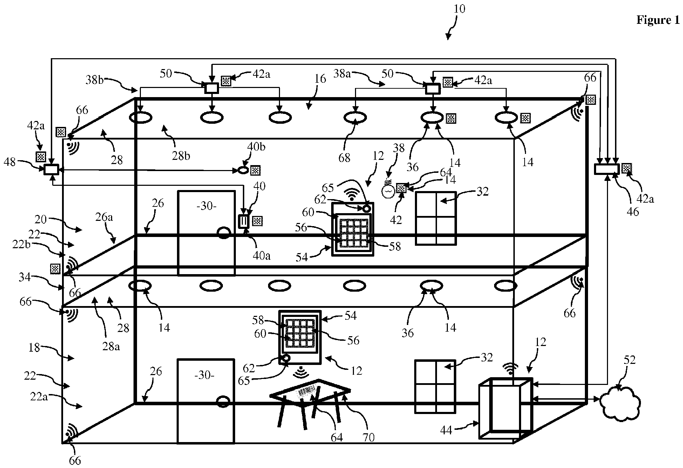

Figure 1 shows a perspective view from below of two floors of a structure, in this case a commercial building; a first embodiment of an asset management system in accordance with the invention is shown on the upper floor, and a second embodiment of an asset management system in accordance with the invention is shown on the lower floor.

Referring to the drawing, there is shown a building 10 which comprises a first embodiment of an asset management system 12, and one or more energisable devices 14 within an interior 16 of the building 10.

The building 10 may have one floor or any number of floors, and the asset management system 12 hereafter described can be applied to any structure, whether domestic or commercial, with any number of floors. In this case, and for the sake of clarity, only two floors are shown, being a lower first floor 18 and an upper second floor 20, each with a single room 22 enclosed on four sides by walls, and each having a floor 26 and ceiling 28.

By way of example, each room 22 includes an openable and closable door 30, and a window 32, and the ceiling 28a of the lower room 22a is separated from the floor 26a of the upper room 22b by a cavity 34 to accommodate joists and other structural elements.

The building 10 includes one of typically several energisable building systems 36. In this case, by way of example, the energisable building system 36 is a series of said energisable devices 14, such as light emitting elements 38, a plurality of which is provided on the ceiling 28b of at least the upper room 22b. Similar light emitting elements 38 are also provided on or in the ceiling 28a of the lower room 22a, but further description is omitted regarding the operation of these light emitting elements 38 for clarity.

The light emitting elements 38 may be arranged in groups 38a, 38b with each group 38a, 38b being independently switchable via a switch device 40, such as a light switch 40a, again typically being locally provided on a wall of the respective room 22, and generally close to the entrance/exit door 30.

Switching control of the light emitting elements 38 may also be achieved via any other suitable switch device or a combination thereof, such as a motion or presence detector 40b or other remote-monitoring detector, an image and/or bio-signature capture and/or acquisition device, camera or video, for example.

Although the switch devices 40 and the respective energisable devices 14, in this case being light emitting elements 38, may all be on a common floor, it is feasible that certain switch devices, including monitoring devices, may energise and deenergise associated light emitting elements and/or other energisable devices forming part of the or multiple building systems on different floors, as necessity dictates.

Although the energisable building system 36 associated with the asset management system 12 is predominantly suggested as being a lighting circuit, other energisable building systems or a combination thereof may be controllable and thus associable in a similar manner. Such energisable building systems may include, for example, but not necessarily limited to a boiler and/or associated heating and/or cooling system or circuits, computers, displays and/or peripheral computer devices such as printers and scanners, as well as none electrically connected or energisable equipment, as will be hereinafter described, such as tables and chairs.

In all of these instances, each component of the energisable building system 36, in this case being the light switches 40a and the associated light emitting elements 38, preferably include a unique identifier 42. Advantageously, the unique identifier 42 may be an optically-readable code, such as a barcode or QR code. In this case, the unique identifier 42 is preferably provided on an exterior surface of the said component, such as via a printed sticker.

A control system in its broadest aspect includes a server 44, master controller 46, high-priority slave controller 48, and low-priority slave controller 50. The server 44 comprises known suitably robust computer hardware capable of facilitating both a running instance of software that is capable of accepting requests from at least the master controller 46, high-priority slave controller 48 and the low-priority slave controller 50, and which is capable of facilitating execution of such software by way of suitable processor or processors and memory storage.

The server 44, in this embodiment, is situated in the lower room 22a of the building 10, and is in data communication at one side to a distributed computer network 52, for example, the Internet, and at another side to at least the master controller 46. The location of the server 44 may be inside or outside of the building 10 at any preferred position, and may be virtual or 'cloud' based and thus located in a centralised data centre remote from the building 10, whereby the master, high-priority slave and low-priority slave controllers 46, 48, 50 undertake data transfer with the server external of the building 10.

In the present embodiment, one server 44, and one master controller 46, high-priority slave controller 48 and low-priority slave controller 50 per floor are suggested. However, multiple servers, master controllers, high-priority slave controllers and/or low-priority slave controllers can be utilised within the control system.

It is preferable that the or each master controller 46, the or each high-priority slave controller 48 and the or each low-priority slave controller 50 have matching or substantially matching hardware. This is particularly beneficial in reducing stock levels, delivery times, and the real time commissioning by the installer or installers. It also deskills the installer, leading to reduced errors and mistakes during the installation process.

As with the components of the energisable building system 36, in this case being the or each switch, monitoring device and light emitting element, the or each master controller 46, the or each high-priority slave controller 48 and the or each low-priority slave controller 50 has a further unique identifier 42a. This may take the form of an externally-mounted optically-readable code, such as a barcode or QR code. Additionally or alternatively, the or each master controller 46, the or each high-priority slave controller 48 and the or each low-priority slave controller 50, along with each switch device 40 and/or energisable device 14 as required, may also include a unique digital identifier, not shown. The digital identifier preferably corresponds to the external identifier, and this would typically be a fixed or static IP address, for example, to ultimately allow the server 44 to communicate therewith.

To install the control system, an installer preferably utilises a handholdable mobile computing device 54, such as a tablet computer or laptop. The computing device 54 includes a relationship matrix 56 implemented to run by software thereon, having a user interface 58 on a display screen 60 of the computing device 54 preferably depicting a generalised floor plan of the building 10. To enable input or capture of the associated unique identifiers 42, 42a, the mobile computing device 54 preferably includes an optical reader, scanner or other suitable image capture and recognition device 62 or system. As an alternative, the installer may be provided with a separate image capture and recognition device or system, such as a handholdable portable scanner.

The installer thereby installs the master controller 46 generally locally or in relatively near proximity to the components of the energisable building system 36 to be controlled. It is preferable to enable reduced latency during an energisation and a deenergisation procedure to have the master controller 46 closer to the components than the server 44. In the example being described, a said master controller 46 is installed at or adjacent to the upper room 22b of the building 10, and in this case it may be convenient to locate the master controller 46 on the interior wall of the upper room 22b, or within the wall, floor or ceiling cavity 34 of the associated floor. Prior to, during or following installation of the master controller 46, the further unique identifier 42a is logged, for example, by scanning, using the image capture and recognition device 62 or system, which identifies the position of the master controller 46 on the floor plan. The further unique identifier 42a corresponding to the master controller 46 is thus recorded by the relationship matrix 56.

The installer preferably then installs the low-priority slave controller 50, in this case on or within a ceiling cavity. The low-priority slave controller 50 is connected to one or more of the energisable components of the building system 36, for example, one or a group 38a, 38b of the light emitting elements 38. Again, prior to, during or following installation of the low-priority slave controller 50, the associated further unique identifier 42a is logged which identifies the position of the low-priority slave controller 50 on the floor plan. The further unique identifier 42a corresponding to this particular low-priority slave master controller 46 is thus recorded by the relationship matrix 56. Similarly, with the controllable light emitting elements 38 or other energisable components installed, the associated unique identifiers 42, 42a are also logged, for example, by scanning using the image capture and recognition device 62 or system, and thus recorded appropriately in the relationship matrix 56. This recording aspect of the unique identifiers 42, 42a of the light emitting elements 38 forms part of the asset management system 12, mentioned herebefore, and will be described in further specific detail hereinafter.

Within the matrix, therefore, a specific said low-priority slave controller 50 is identified as communicating with one or more specifically identified light emitting elements 38 or other components of the building system 36 via the recording of the respective unique identifiers 42, 42a and the association given by the installer in the relationship matrix 56.

With the or each low-priority slave controller 50 associated and communicating with the light emitting elements 38 or other energisable components, as required, the installer may then install the or each high-priority slave controller 48. The high-priority slave controller 48 is connected to one or more of the switch devices 40, whether that is a manual switch and/or a remote-detector switch. Similarly, the high-priority slave controller 48 may be mounted on the wall, ceiling or floor of the building 10 or in a cavity void, preferably in relatively close proximity to the switch device 40 or devices. The installer logs the further unique identifier 42a on the floor plan and thus in the relationship matrix 56, and connects the high-priority slave device 48 to the associated switch devices 40 for communication therebetween, which are similarly logged in the relationship matrix 56 by their unique identifiers 42. The installer also associates one or more of the installed high-priority slave controllers 48 with one or more of the installed low-priority slave controllers 50 to indicate a control relationship, and this is identified on the floor plan and thus also on the relationship matrix 56. Following this, the installer further associates one or more specific installed master controllers 46 with one or more high-priority and low-priority slave controllers 48, 50, in accordance with the control required of the building system 36.

Although low- and high-priority slave controllers are suggested, the control requirements of the building system may only require one or more slave controllers with or without the aforementioned priorities. Additionally or alternatively, the priorities may be determined by physical hardware, for example, to be controlled, rather than at the controller itself. Furthermore, no priority or a level-, zero- or flat-hierarchical priority structure may be implemented, as necessity dictates. Additionally, if a switch device is utilised in the system, this may be assigned to a low-priority, typically slave, controller instead of a high-priority slave controller, again as necessity dictates. In this latter option, it is to be understood that functions and/or devices associated with the high- and low-priority slave controllers may be interchangeable.

With all the components of the building system 36 installed and logged, along with the master controllers 46 associated with their respective high-priority slave controllers 48 and their low-priority slave controllers 50 to allow two-way communication therebetween, and the high-priority and low-priority slave controllers 48, 50 also in two-way communication, the relationship matrix 56 is uploaded by the installer via the computing device 54 to the server 44 and at least in part to the or each master controller 46.

Following upload, the server 44 automatically determines based on the relationship matrix 56 the firmware required by each of the master controller 46, high-priority slave controller 48 and the low-priority slave controller 50. Through the connection to the distributed computer network 52, in this case being the Internet, the server 44 automatically requests and downloads the appropriate software, and distributes this within the building 10 to the or each master controller 46, high-priority slave controller 48 and low-priority slave controller 50. Installation preferably occurs automatically on arrival via a self-executable file structure package. The firmware installation automatically by the server 44 enables the or each high-priority slave controller 48 and low-priority slave controller 50 to communicate with and/or control the respective associated switch devices 40 and energisable devices 14, along with the or each master controller 46 controlling the respective associated high-priority and low-priority slave controllers 48, 50, in accordance with the locally automatically installed relationship matrix 56 or required portion thereof.

In use, it is therefore the master controller 46, which is typically in closer proximity to the high-priority and low-priority slave controllers 48, 50 and their associated components of the building system 36 than the server 44, which is dedicated to the control function of the energisable devices 14, such as the light emitting elements 38, independently of the server 44.

When, for example, a said light switch 40a is manually activated by an occupant of the building 10, this is communicated to the high-priority slave controller 48, which outputs a first activation signal to the master controller 46. The master controller 46, via the uploaded relationship matrix 56 or portion thereof relating to the upper room 22b, thereby outputs a second activation signal to the appropriate low-priority slave controller 50, which thereby enables energisation of the associated one or group 38a, 38b of lights. A similar process occurs when the or each light is required to be deenergised.

The asset management system 12 may be considered as part of the aforementioned control system, or may be considered as a separate system.

The asset management system 12 makes use of the previously described unique identifier 42, 42a as, for example a data tag of, an asset location indicator 64, thereby enabling the output of a unique identifying signal specific to the energisable device 14, in this example being the light emitting element 38. The data associated with the asset location indicator 64 may be broadcastable via a transmitter forming part of the data tag, for example, active or passive RFID, or may be an optically readable code as in the current embodiment.

Three or more signal receivers 66 are located in spaced-apart relationship around the asset location indicator 64. A minimum of three signal receivers 66 are required to enable position determination via triangulation. It may be feasible to accurately determine a position of the asset location indicator 64 inside a room 22 using fewer than three signal receivers or transmitters, such as via room imaging technology to scan a room in order to provide a base range of data, and then image recognition technology to either automatically or manually identify objects in the room associated with the asset location indicator. Locating these objects in three dimensions then allows geopositional tagging of specific devices or elements.

In the present embodiment, the signal receivers 66 are preferably radio-frequency receivers, each also with their own unique identifier for recordal by the installer in the relationship matrix 56.

The signal receivers 66 are in communication with the server 44, either directly or via the master controller 46, high-priority slave controller 48 and/or low-priority slave controller 50.

With a light emitting element 38, such as a light bulb, removed from its holder 68, as shown in the drawing, the data relating to the unique identifier 42, 42a corresponding to or forming part of the asset location indicator 64 is acquired by the mobile computing device 54 of the installer using, in this case, an onboard data receiver 65. This may conveniently be via the image capture unit or camera 62 of the mobile computing device 54. The mobile computing device 54 or other indicator acquisition device utilised by the installer must be aligned with the geographical position of the in use light emitting element 38 or other in use device, in this case when received in the bulb holder 68 in the ceiling of the upper room 22b.

With the data from the tag of the asset location indicator 64 acquired and the mobile computing device 54 positionally aligned, the mobile computing device 54 outputs a, preferably radio-frequency, location signal to the signal receivers 66. The mobile computing device 54 can thus be considered part of the asset location indicator 64.

The signal receivers 66 receive the location signal, and dependent on a time differentiation of receipt between the signal receivers 66, a precise interior geographic location can be assigned to the light emitting element 38, preferably in the relationship matrix 56.

Referring to the lower room 22a, the asset management system 12 is shown locating the position of a desk or table 70. The table 70 again includes a unique identifier 42 thereby corresponding to a specific said asset location indicator 64. With the table 70 at its determined location, the mobile computing device 54 is used to capture the asset location indicator data and thus output a location signal to the associated signal receivers 66. Dependent on the time taken for the location signal to reach each said signal receiver 66, a precise interior geographic location can again be assigned to the table 70, again preferably in the relationship matrix 56.

Similar recordal processes can be undertaken with any interior asset.

By way of example, in use, if a light emitting element 38 breaks, then the installer releases or demounts the light emitting element 38 and with the mobile computing device 54 aligned with the bulb holder 68, scans the unique identifier 42 of the removed light emitting element 38, preferably marking on the mobile computing device 54 a reason for removal of the light emitting element 38. A unique identifier 42 of a replacement light emitting element 38 is then read or scanned, again with the mobile computing device 54 aligned with the bulb holder 68, before being mounted. With the mobile computing device 54 preferably still positionally aligned, the unique identifier 42 of the replacement light emitting element 38 is outputted to the associated signal receivers 66, and the relationship matrix 56 is updated. The data is uploaded to the server 44, allowing tracking of the fact that a specific light emitting element 38 at a specific location has been replaced or changed.

In regards the table 70, should a user require the table 70 to be moved to a different location, the table 70 and associated physical interior assets can all be tracked or managed. A position of the table 70 may be first redetermined by scanning its unique identifier 42 via the installer's mobile computing device 54 whilst being positionally aligned. The asset location indicator 64 is outputted to the signal receivers 66, and a precise interior geographic location is reaffirmed. The table 70 is then moved to the new location, the asset location indicator 64 is reacquired by the positionally-aligned mobile computing device 54, and the signal receivers 66 update the new precise interior geographic location. Any other assets that must also be relocated or reassigned, such as seating, lighting, heating and/or computing devices are updated, preferably via the relationship matrix 56, in a similar manner.

With the updated positional data, preferably via the updated relationship matrix 56, uploaded to the server 44, the server 44 as described above automatically determines whether updated or different firmware is required for the control elements, such as the master controller 46, high-priority slave controller 48 and/or low-priority slave controller 50. For example, with a user's workstation relocated, the user may be required to utilise a different light intensity and/or ON/OFF timings operated by a different light switch. As such, via the updated relationship matrix 56 having the new geographical location of the assets associated with the workstation, the processors of the server 44 may automatically determine and rollout updated firmware to meet the user's requirements.

Although it is preferable that the relationship matrix is updated via the installer during changing or relocation of physical assets, such as light emitting elements, light holders, switch devices, computer hardware such as terminals, displays and peripheral device such as printers and scanners, tables, desks, chairs and other office furniture, kitchen furniture, such as cupboard units, microwave, kettle and the like, the signal receivers may directly communicate with the server, bypassing the relationship matrix at least in the first instance. The server may then, preferably automatically as before, update the relationship matrix thereafter or simultaneously independently of the installer or without the installers further input.

The above described system is therefore beneficial not only in automatically managing a location and repositioning of physical hardware components of an internal commercial or domestic environment, but also managing a location and positioning of physical backend hardware, such as the above described master and/or slave controllers. This thus allows an entire interior system to be effectively mapped and as such, when a building move, such as an office relocation, is required, the entire system can be more easily, quickly and cost-effectively extracted and rehoused.

Although the asset location indictor is preferably an optically readable code or, for example, a unique IP address for electronic-data communicable devices, any suitable tag, being physical, electronic and/or data, with, preferably unique, asset-specific data therein or thereon may be utilised.

It is particularly beneficial that the above-described controllers, being the or each master controller, the or each high priority slave controller and/or the or each low priority slave controller has matching or substantially matching hardware. In this way, stocking, installation and maintenance of such hardware is optimised in terms of costings and associated time.

Although it is suggested that the installer may utilise a mobile computing device with an onboard or integrated optical image acquisition device as a data receiver for acquiring the tag data of the asset location indicator, a separate or dedicated data receiver may be utilised, such as a hand-holdable barcode scanner and/or NFC-enabled device.

## Claims

1. An asset management system (12) comprising an asset location indicator (64) for indicating a unique identifier specific to a physical asset to be managed within an interior (16) of a building (10), three or more room-locatable signal receivers (66) locatable in spaced-apart relationship around said asset location indicator (64) to define an interior area of said building (10), a server (44) in data communication with the room-locatable signal receivers (66), and an electronic relationship matrix (56) corresponding to said interior area (16), the server (44) having processing means which automatically updates the relationship matrix (56) when there is a change in the asset location indicator (64).

2. An asset management system (12) as claimed in claim 1, wherein, when said change in the asset location indicator (64) corresponds to movement, the processing means automatically determines and installs required firmware.

3. An asset management system (12) as claimed in claim 1 or claim 2, further comprising first and/or second physical assets, the first physical asset being at least one master controller (46), and the second physical asset being at least one slave controller in data communication with each other, the master controller (46) and slave controller having matching or substantially matching hardware and having first and second said asset location indicators (64), respectively.

4. An asset management system (12) as claimed in claim 3, further comprising third and/or fourth physical assets, the third physical asset being a switch device, and the fourth physical asset being at least one energisable device activatable by the switch device, the switch device and the energisable device having third and fourth said asset location indicators, respectively.

5. An asset management system (12) as claimed in any one of the preceding claims, wherein the asset location indicator (64) comprises a tag on or associated with said physical asset and having unique asset-specific data.

6. An asset management system (12) as claimed in claim 5, wherein the asset location indicator (46) includes a tag-data receiver for receiving said unique asset-specific data relating to said tag, said unique identifying signal being outputable to the server by the tag-data receiver (70).

7. An asset management system (12) as claimed in claim 6, wherein the tag-data receiver (70) includes a signal transmitter for outputting a location signal receivable by the room-locatable signal receivers (66).

8. An asset management system (12) as claimed in claim 7, wherein the location signal is a radio-frequency signal, and the room-locatable signal receivers (66) are radio-frequency receivers.

9. An asset management system (12) as claimed in any one of claims 5 to 8, wherein the tag includes an optically-readable data.

10. An asset management system (12) as claimed in claim 5, wherein said tag includes a transmitter circuit for outputting said unique identifying signal relating to said unique asset-specific data.

11. An asset management system (12) as claimed in claim 10, wherein the unique identifying signal is a radio-frequency signal, and the room-locatable signal receivers (66) are radio-frequency receivers.

12. An asset management system (12) comprising an asset location indicator (64) for outputting a unique identifying signal specific to an energisable physical asset to be managed within an interior (16) of a building (10), three or more room-locatable signal receivers (66) locatable in spaced-apart relationship around said asset location indicator (64) to define an interior area of said building, a server (44) in data communication with the room-locatable signal receivers (66), and an electronic relationship matrix (56) corresponding to said interior area (16), the server (44) having processing means which automatically updates the relationship matrix (56) when movement of the asset location indicator (64) is determined and which automatically determines and installs associated firmware based on the relationship matrix (56).

13. A building (10) comprising:
an asset management system (12), and
at least one energisable device (14) within an interior (16) of the building (10) and managed by the asset management system (12),
the asset management system (12) including an asset location indicator (64) which indicates a unique identifier specific to the energisable device (14),
three or more room-located signal receivers (66) located in spaced-apart relationship around said asset location indicator (64) to define an interior area (16) of said building (10),
a server (44) in data communication with the room-located signal receivers (66), and
an electronic relationship matrix (56) corresponding to said interior area (16),
the server (44) having processing means which automatically updates the relationship matrix (56) when there is a change in the asset location indicator (64).

14. A method of managing a physical asset within an interior (16) of a building (10) using an asset management system (12) as claimed in any one of claims 1 to 13, the method comprising the steps of: a] locating three or more room-located signal receivers (66) in spaced-apart relationship to define an interior area (16) of the building (10); b] associating an asset location indicator (64) with a physical asset located within the interior area (16); c] the signal receivers (66) determining a position of the physical asset within the interior area based on the asset location indicator; and d] automatically updating an electronic relationship matrix (56) corresponding to the interior area (16) and a position of the physical asset, when there is a change in the asset location indicator (64).

15. A method of managing a physical asset within an interior (16) of a building (10) using an asset management system (12) as claimed in any one of claims 1 to 13, the method comprising the steps of: a] locating three or more room-located signal receivers (66) in spaced-apart relationship to define an interior area of the building; b] associating an asset location indicator (64) with a physical asset located within the interior area (16); c] the signal receivers (66) determining a position of the physical asset within the interior area (16) based on the asset location indicator; d] automatically updating an electronic relationship matrix (56) corresponding to the interior area and a position of the physical asset, when there is determined a change in position of the physical asset via the asset location indicator (64); and e] using a server (44) to automatically determine and install based on the relationship matrix (56) required firmware associated with the physical asset due to the determined change in position.
